# EUROPEAN PATENT SPECIFICATION

(11) **EP 2 436 509 B1**
(45) Date of publication and mention of the grant of the patent: **05.06.2013**
(21) Application number: 11006112.4
(22) Date of filing: 26.07.2011
(51) Int. Cl.: B29C 65/74, A41D 19/00

(54) **Disposable hygienic webbed glove and manufacturing process of said glove in a tear-off reel**
Gefingerter Einweghygienehandschuh und Herstellungsverfahren des Handschuhs in einer Abreißrolle
Gant hygiénique palmé à usage unique et son procédé de fabrication à partir d'une bobine

(30) Priority: 01.10.2010 IT TV20100132
(43) Date of publication of application: 04.04.2012
(73) Proprietor: VIROSAC SRL, 20122 Milano (IT)
(72) Inventor: Virago, Graziano, Cavaso del Tomba (TV) (IT)
(74) Representative: Osti, Biancamaria

(56) References cited:
- WO-A1-2009/036499
- FR-A1- 2 638 068
- US-A- 4 034 853
- US-A- 4 677 697
- US-A- 5 025 503

## Description

The object of the present invention is a throwaway palmate hygienic glove and the execution process of said glove in a tear-off reel.

### Definitions:

HYGIENIC GLOVE: it is a throwaway device, which can be used by the user by taking it from dispensers, and is also used to handle foodstuff, and consists of a casing of plastic material, for example obtained from thermoplastic resins, equipped with an opening side and shaped like a hand, with the palm, the back and the fingers respectively.

PALMATE: having the form of the hand and the fingers being connected or part of a membrane like the legs of the family of the palmipeds.

TEAR-OFF REEL: it is a roll of plastic material, wound on itself. DISPENSER: structure suitable to allow the best and ergonomic distribution of products.

### Domain

In the sector of food retail distribution and in particular for the selection, taking and introduction in the plastic bag, of commercialized articles such as fruit and vegetables, for example, in the most common supermarkets, in order to meet the strict sanitary criteria of the specific sector throwaway gloves have been made available for some time now in transparent thermoplastic material, e.g. the HDPE (high-density polyethylene), which the customer should absolutely use according to their common sense, wearing beforehand at least one glove. This operation first requires the taking of the single glove from the dispenser, which in principle is a parallelepiped container, opened on the upper part, placed at a suitable height, generally on a standing support, for the most comfortable taking by the user, it is then inserted on at least one hand and successively used by means of the limb in such a way as to handle and select the fruit and vegetables. Each glove is conventionally arranged in a single way inside the container and is placed the one above the other like a packet in such a way as to be absolutely separated from one another. Once it has been used, the glove is removed and thrown away. Together with the glove, also transparent thermoplastic material bags are used to contain the selected fruit and vegetables, which bags are however unwound and individually torn each time by the user, from a reel in the form of a roll of bags, which reel is housed inside a standing dispenser as well.

### Prior art

With the purpose of objectively evaluating the novelty and originality degree of the proposed solution, a research among patents has been carried out, accessing common public databases, on the basis of the respective updates. From the research, even though it has not been carried out in depth, some prior documents have been found which represent the most relevant prior art referred to the object of this invention:
D1 W02009/036499 (Backhaus)
D2 FR2638068 (Baillargeau)
D3 US4034853 (Smith)
D4 US4094120 (Goncalves)
D5 US4677697 (Hayes)
D6 EP0542332 (Cigarini)
More particularly, D1 refers to a packaging for throwaway gloves and to a method and an apparatus which can use the packaging to allow the gloves to be applied on the hands of the user. The gloves are stored in a roll and are unwound and opened from the apparatus so that the users can hygienically insert their hand in the glove without touching the glove. The users, with their hand in the glove, can then separate the glove from the roll of gloves moving their hand down and away from the apparatus. The apparatus can be unwound and opened in such a way as to prearrange another glove for the user to be put on the other hand.
**D2** The invention refers to the gloves, to the method of production in a continuous tape of two superimposed layers of thermoweldable (heat-weldable) plastic material. According to this method, the two layers are welded along a line, following the shape of the gloves where each glove 1 so formed is connected to the adjacent glove in the band by the binding means capable of being easily broken. The method shows the gloves each oriented with the fingers extending along the axis of the band, because said band is cut along the contour line of the gloves, at least between the fingers of the following glove. The band is made of a sequence of aligned gloves along an axis in which two adjacent gloves are each connected by the connecting means perpendicularly distributed with respect to the axis of the sequence of the gloves to form a band of gloves which is capable of being wound.
D3 describes throwaway gloves obtained from film in plastic material in two layers, which are heat-sealed in the profile of the five fingers of a glove and simultaneously cut for removing the material between the fingers and at the side and at the base of the relative gloves. The gloves are formed in a strip with the three central fingers of each glove being inserted at the base or the curved opening of the wrist of the adjacent glove. The welding of the adjacent fingers with respect to the opening of the wrist of the following glove has an indentation or a perforation which is external with respect to the heat-sealed portion in the portion of the wrist of the following glove. This configuration allows a strip of gloves to be wound or presented in superimposed layers inverted for the continuous distribution, allowing every glove to be detached from the exiting one with all the intermediate portions being cut and the opening of the wrist being completely open, ready to be used.
D4 The superimposed sheets of plastic material lie on the sheet of the wound material. The gloves shown are obtained by means of sealing of superimposed plastic sheets and together in the form of two gloves fixed to each other at their wrists. The couple of gloves shown is therefore cut, a glove is folded on the other one and the gloves and the wrapping sheet folded until forming a packaging, which is kept closed by an adhesive strip.
D5 A throwaway plastic material glove for cleaning is economical to manufacture and easy to use and is obtained from two thermoplastic material sheets joined together by sealing the form and perforating for an easy detaching. A device for cutting the closure extends along the outside of the portion of the wrist and a strip of the string extends along the closure. When an object is taken using the glove, the glove presents the inside turned outside to form closed container and closure. The strip of the string can be closed for a double guarantee and a tape placed on the outside of the glove, now inside, presents the breakage of the flavour container to disinfect and deodorize the content.
D6 The device has a thin strip of indefinite length formed by gloves joined together one at a time in sequence and is provided with the pre-fracture transversal lines. There are a couple of small conveyor belts, some active branches which look at each other and move in the same direction at the same speed, which present reciprocal contact at their upwardly ends while they diverge at their downward ends. The strip formed by the gloves is suitable to advance between the active branches due to the action of the conveyor belts. A case contains the strip and the conveyor belts and has a mouth placed at the downward end for the exit of the strip on the outside. The operation of the conveyor belts is controlled by the action of the user in such a way that the strip formed by the gloves advances through a finite distance suitable to make the end of the strip accessible to the user and passing through the exit mouth, while the glove at the end is then accessible, while still the following upward glove is pressed between the upward ends of said active branches.

In conclusion it is therefore reasonable to consider the following as known:
- Throwaway gloves in thermoplastic material used for the retail sale in the food sector, heat-sealed along the profile of the five fingers in such a way as to follow the shape of the hand, and with an opening corresponding to the wrist through which the hand of the user is inserted;
- Throwaway gloves in thermoplastic material heat-sealed according to the profile of the five fingers, distributed in series adjacent and next to each other, aligned, and obtained, in correspondence of a coupled and heat-sealed material tape which is unwound from a distribution reel;
- Where said heat-sealed and coupled material tape is obtained superimposing two layers of the same thermoplastic material, in correspondence of which the profile of each glove is heat-sealed, step by step, in logical sequence.

### Drawbacks

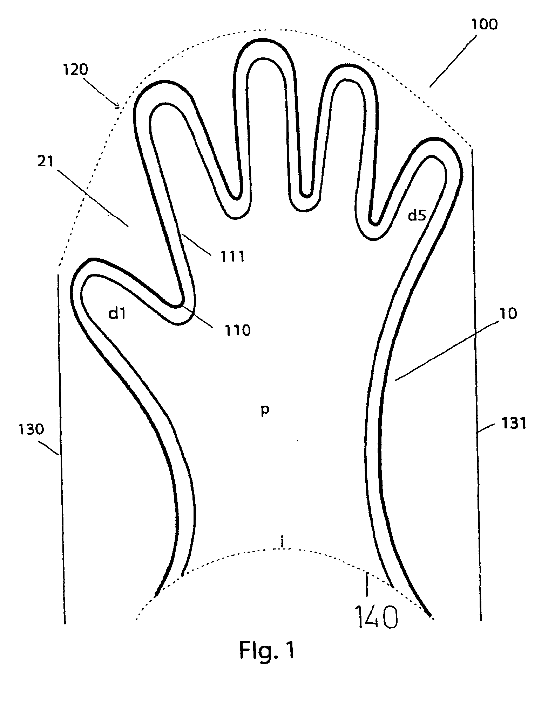

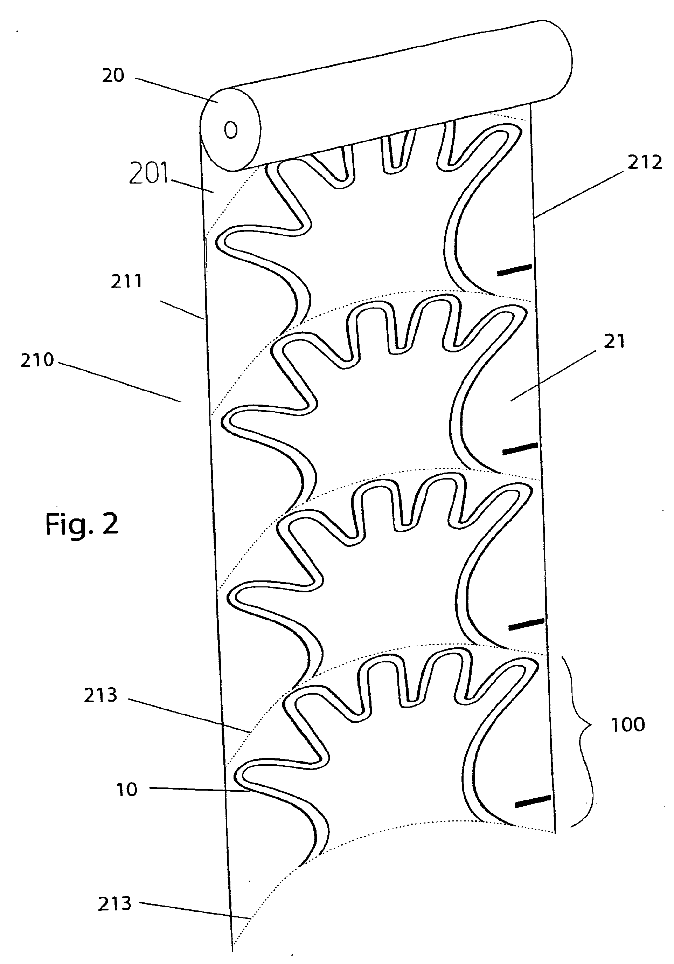

The applicant believes that the above-described solutions present some drawbacks, despite being valuable and solving some problems.
A first disadvantage in the prior art, in particular referring to D1, comes from the fact that each glove which is palmate in the solution of Figure 1 and Figure 2 is composed of two superimposed panels of rectangular shape, inside the area limited by said panels the profile of each glove being heat-sealed, which does not seem to be particularly suitable to handle the selected products. The shape of the panels, which is rectangular, constrains the free movement of the fingers of the hand, not favouring an effective hold of the selected products preventing the closure so much that, for example a firm hold not being possible, the products themselves above all those of small size tend to slip, which precludes the safe introduction inside the bag. The following Figure 5 where an alternative solution is provided for, gives evidence that the solution seems to be little effective, providing the execution of a cut according to a straight line between the fingers. Only in this way there seems to be a better and more effective hold, which is comparable to that of the conventional gloves where the glove is shaped according to the profile of the fingers without the connecting material between the same which constrains their movement. From the production point of view, each aligned glove, see for example Figure 7, is obtained superimposing two plastic material sheets from two different main reels. From the executive point of view, said equipment is particularly complex and expensive in the execution as well as in the set-up and maintenance.
D2 as well as D3 still show a throwaway glove, which is not however palmate, obtained by heat-welding the profile of the fingers of a hand, which is obtained, aligned to a second glove along a horizontal median axis, starting from the coupling of two material layers. In this case, the fingers are released from one another, just like the conventional gloves, not providing connecting material between adjacent fingers. The shape of the forepart with respect to the coupled material layers of each glove provides a perforation with semicircular development, and analogous perforation with semicircular development is obtained in correspondence of the wrist. In the hypothesis described above, the problem is evident of excess material, which is the plastic material part exceeding once the glove has been torn from the adjacent glove. The recovery of said excess material in many cases is particularly difficult to manage and furthermore for the user it involves objective difficulties in the traditional use.
As regards D4, it refers to throwaway gloves which are not obtained in such a way as to be distributed and separated each time from a reel, because they are folded on one another like a packet and, consequently, they are not efficiently suitable for a rational distribution. Also from the production point of view they would be more difficult to execute with respect to the solutions from D1 to D3 and substantially no longer current.
As regards D5, it refers to gloves which are distributed in rolls, but which maintain the problem of the excess material exceeding once they are torn from the film. Moreover they appear to be particularly uncomfortable for the user, since they are offered to said user, the one opposing to the other, in such a way as to intersect the fingers. It is reasonable to suppose that it is difficult to separate the one from the other and furthermore the configuration is more suitable for a use of both gloves, when this hypothesis is not necessary or is mainly remote in case said gloves are to be intended for use for the selection and the taking of fruit within the retail distribution of foodstuff.
Finally D6 is about a dispenser of gloves which are obtained aligned to each other, along a strip of plastic material. Said gloves are not configured to have the shape of the fingers, but have the only seat for the thumb and a single seat for the four remaining fingers. In this case the plastic material film being worked on and with respect to which the gloves are heat-sealed along a line, is of single-bending type and is unwound upstream from a corresponding main reel.

It is therefore reasonable to consider the following as known:
- a plastic material tape, obtained coupling by overlapping two films of similar plastic material, unwound from two corresponding reels in correspondence of which to obtain the profile of at least one glove by heat sealing;
- a plastic material tape, of the single-bending type, unwound from a corresponding main reel in correspondence of which to obtain the profile of at least one glove by heat sealing;
- gloves heat-sealed along a line and aligned with respect to said plastic material tape, the one following the other, oriented in the same direction and with perforation lines, the one distinguished from the other in such a way as to separate, each time and by means of tear, each glove from the contiguous and following glove, said plastic material tape in correspondence of which said gloves are heat-sealed being rewound on a reel;
- heat-sealed gloves where the shape of the heat sealing follows at least partly the profile of the fingers of the hand, in such a way that tearing off the glove from the corresponding material tape an excess material remains;
- heat-sealed gloves in which the shape of the heat sealing is obtained in correspondence with at least one substantially quadrilateral panel, where said panel is detachable by means of tearing with respect to the following panel.

All this considered, the need is reasonable for the enterprises of the sector to identify some innovative solutions able to optimize as a whole the execution process of throwaway gloves and make them more easy to use for the customer.

### Summary of the invention

The object of this invention consists in a throwaway palmate hygienic glove and the execution process of at least said glove aligned with respect to at least one second glove integrated in a layered tape of transparent thermoplastic material wound on a tear-off reel, where said glove is obtained in correspondence of the layered tape of thermoplastic material, said layered tape of thermoplastic material being of the type made by at least one thermoplastic material film unwound upstream from a corresponding reel and heat-sealed downstream according to the shape of the fingers and of the palm of the hand, and where said glove is heat-sealed in correspondence with said layered tape of thermoplastic material in such a way as to follow the profile of the five fingers and the palm of a hand in such a way that in the area between each finger there is connecting thermoplastic material between said fingers and where at least one perforation line separates each glove from the following glove for the tear, where said perforation line which is obtained in proximity of the points of the fingers and in correspondence of the wrist, has a semicircular development with angle between 90° and 180° sexagesimal degrees and has convex shape which originates at a first one of the two edges of said thermoplastic material tape and extends in a non-symmetrical way up to the second one of said two edges.

### Aims

In this way, through the considerable creative contribution whose effect constitutes an immediate and non negligible technical progress, different and important aims are achieved.

A first aim and advantage consists in the fact that a throwaway glove is made available which can be easily torn by the customer who intends to use it, mainly because the perforated tearing line has a semicircular shape with asymmetric start and end, differently from the solution shown in D1, where the panels referred to each glove have a quadrilateral shape with the perforation lines from edge to edge being exclusively rectilinear. The development of the perforated line simplifies the detachment of each glove by effect of the movement of the arm and the hand which, in carrying out the taking and traction action of the glove from the dispenser, carries out a light rotation, generally downward, in such a way as to both unwind and start the separation contrasting said layered tape of transparent thermoplastic material wound on a reel against the separating edge of said dispenser.

A second aim and advantage consists in the fact that it provides a palmate glove, which once torn substantially causes no residual material excess. Indeed said glove is used as it is once it is torn off from the following glove without creating any residue or waste material. Furthermore the fact that it is palmate, therefore with connecting plastic material between adjacent fingers, offers a wider and safer hold surface, in such a way as to make it easier to manipulate the loose foodstuff, increasing the contact surface, which prevents the product itself from slipping from the hands, also in the presence of strong humidity, and therefore from falling down.

Again, the palmate configuration of the glove together with the fact that the material is transparent, is also particularly suitable to be printed or silk-screen printed, on one or both plane surfaces of the layered material tape, in such a way as to offer a substantially uniform surface over which advertising names may be put, for the purpose of a targeted marketing, for example of the same shop or other indications aimed at communicating or capturing the attention of the user. In particular, the printing of the glove is useful for advertising information, but also above all for giving visibility about the orientation for the insertion of the hand in the glove as the heat-sealed profile is difficult to read, being done on transparent material. It is obvious that for example above all a definition line, for example also coloured, internal with respect to the heat sealing line in such a way as to follow the profile or even superimposed, facilitates the visibility to the user of the correct direction of introduction of the hand and in some cases the limits of the glove itself.

Another advantage is in the working, which, starting from a main reel with single-bending film, makes the process object of this invention more economical, speeding it up for better adjusting it to criteria of industrial production on a large scale.

These and other advantages will appear from the following detailed description of at least one preferred solution with the aid of the attached drawings.

### Content of the drawings

- Figure 1 is a plan-view of the glove according to the invention;
- Figure 2 is an axonometric view of a series of gloves with aligned profile and integrated in a layered tape of a tear-off reel;
- Figure 3 is an axonometric view of the production scheme of said palmate gloves as per Figures 1 and 2.

### Practical execution of the invention

The present invention refers to a throwaway palmate hygienic glove (10) and the execution process of said glove (10) obtained in a tear-off reel (20).

The palmate hygienic glove (10) consists of a panel (100) obtained from transparent thermoplastic material (21) consisting of two films of similar material, which are superimposed, coupled and heat-sealed. In this case the heat sealing (110) is obtained in such a way as to follow the profile of the hand, which includes the five fingers of the hand (d1-d5) and the palm of the hand (p) leaving free one end (i) and which corresponds to the opening to allow to wear the glove (10). Each glove (10) in the area between the fingers (d1-d5) presents continuous transparent thermoplastic material (21) in such a way that said glove (10) is confined inside said panel (100). At the forepart of said glove (Fig. 1) the glove (10) has an essentially semicircular front edge (120), with a convex shape, which remains slightly distant from the fingers (d1-d5), which originates and ends at the two parallel side edges (130, 131) of said panel (100). The lower part of the relative panel (100) presents an essentially semicircular back edge (140), with a convex shape, which edge (140) originates and ends at the two parallel side edges (130, 131) of said panel (100). The front edge (120) and the back edge (140) are parallel to each other and start from the common side edge (130) at a height different from the side edge (131). In order to improve the visibility of the glove (10) and facilitate the insertion, a visible profile (111) can be situated on only one side of said glove (10) and inside the profile defined by the heat sealing (110) and obtained by means of printing or silk-screen printing, also in a coloured way, in such a way that the contrast appears with the transparent surface of said glove (10), and said visible profile (111) obtained by means of forming which follows the path of said profile defined by the heat sealing (110).

At least one glove (10) in a practical solution of execution is obtained in a continuous operation in correspondence with a transparent thermoplastic material tape (210) (Fig. 2) in such a way that each glove results aligned to the other and longitudinally with respect to said transparent thermoplastic material tape (210) and then wound on a distribution reel (20). Each glove (10) is contiguous, and detachable by means of tearing, with respect to the other one and aligned in such a way as to orient the fingers of the hand (d1-d5) toward the opening (i) of the adjacent glove. In this case the side edges (211, 212) of the transparent thermoplastic material tape (210) coincide each time with the side edges (130, 131) of the panel (100) of each glove (10) of which the front edge (120) and the back edge (140) form an integral part, these latter being obtained engraving said transparent thermoplastic material tape (210) by means of perforation lines (213) step by step. Said perforation lines (213) are then obtained in proximity of the points of the fingers (d1-d5) and in correspondence of the wrist, and each one has a semicircular development with angle between 90° and 180° sexagesimal degrees and a convex shape which originates at a first one (211) of the two edges of said transparent thermoplastic material tape (210) and extends in a non-symmetrical way up to the second one (212) of said two edges.

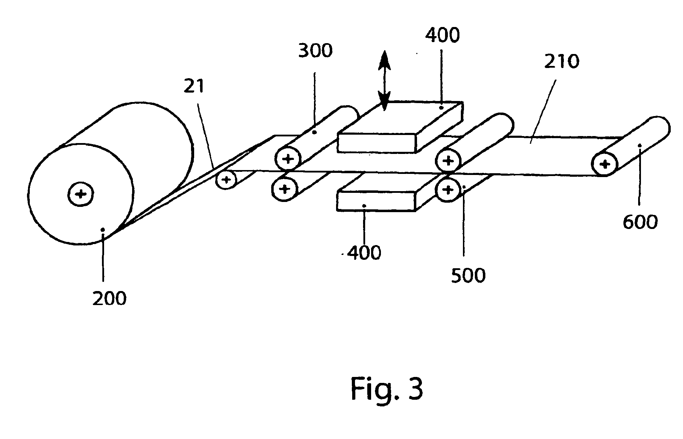

From the production point of view, (Fig. 3), the glove (10) in a transparent thermoplastic material tape (210) is obtained starting from a single-bending transparent thermoplastic material film (201) wound in a main reel (200). A first calender (300) starts the single-bending film (201) unwound from said main reel (200) through a heat sealing station (400) consisting of at least one hot plate having the shape of the profile of the glove (10), and said heat-sealed transparent thermoplastic material tape (210) being then extracted, through an extraction calender (500) and then wound by a corresponding winder (600). From the execution point of view, the single-bending film (201) wound in the main reel (200) can be of the type printed or silk-screen printed with names, logos or ornamental patterns, in such a way that each glove (10) is provided with information for communication purposes or decorated according to the user needs. In the case in which the use of a single-bending film (201) already decorated or provided with names for commercial purposes is not provided, a printing station of said patterns can also be provided preferably upstream of the heat sealing station (400) and following the unwinding phase of the single-bending film (201), where said printing station prints the desired pattern in correspondence with at least one of the two surfaces.

### References

(10) throwaway palmate glove
(20) tear-off reel
(21) transparent thermoplastic material
(100) panel
(110) heat sealing
(111) visible profile
(d1-d5) fingers of the hand
(p) palm of the hand
(i) opening
(120) front edge
(130, 131) parallel side edges
(140) back edge
(200) main reel
(201) single-bending
(210) transparent thermoplastic material tape
(211, 212) side edges
(213) perforation lines
(300) single-bending film start calender (201)
(400) heat sealing station
(500) extraction calender
(600) winder

## Claims

1. Throwaway palmate hygienic glove (10) consisting of a panel (100) obtained from transparent thermoplastic material (21) consisting of two film layers of similar material, which are superimposed, coupled and heat-sealed, said heat sealing (110) being obtained in such a way as to follow the profile of the hand, which includes the five fingers of the hand (d1-d5) and the palm of the hand (p) leaving free the end which corresponds to the opening (i) and allowing to wear the glove (10), in which said glove (10) in the area between the fingers (d1-d5) has continuous transparent thermoplastic material (21) in such a way that said glove (10) is contained inside said panel (100), **characterised in that** at the front part of said glove (10) it has an essentially semicircular front edge (120), with a convex shape, which remains slightly distant from the fingers (d1-d5), which originates and ends at the two parallel side edges (130, 131) of said panel (100), and in which the lower part of the relative panel (100) has an essentially semicircular back edge (140), with a convex shape, which edge (140) originates and ends at the two parallel side edges (130, 131) of said panel (100), and in which both the front edge (120) and the back edge (140) are parallel to each other and originate from the common side edge (130) at a different height from the side edge (131).

2. Throwaway palmate hygienic glove (10) according to claim 1, **characterised in that** from the internal side of the profile defined by the heat sealing (110) a visible profile is obtained (111), by means of forming which follows the path of said profile defined by the heat sealing (110).

3. Throwaway palmate hygienic glove (10) according to claims 1 and 2, **characterised in that** it is obtained in a continuous operation in correspondence of a transparent thermoplastic material tape (210) in such a way that each glove results (10) aligned to the other and longitudinally with respect to said transparent thermoplastic material tape (210) and then wound on a distribution reel (20), each glove (10) is contiguous, and detachable by means of tearing, with respect to the other and aligned in such a way as to orient the fingers of the hand (d1-d5) towards the opening (i) of the adjacent glove, with the side edges (211, 212) of the transparent thermoplastic material tape (210) coinciding each time with the side edges (130, 131) of the panel (100) of each glove (10) of which the front edge (1 20) and the back edge (140) form an integral part, these latter being obtained engraving said transparent thermoplastic material tape (210) by means of perforation lines (213) step by step, said perforation lines (213) being obtained in proximity of the points of the fingers (d1-d5) and in correspondence of the wrist, each of said perforation lines (213) having a semicircular development with angle between 90° and 180° sexagesimal degrees and having convex shape which originates at a first one (211) of the two edges (211, 212) of said transparent thermoplastic material tape (210) and extends in a non-symmetrical way up to the second one (212) of said two edges.

4. Execution process of at least one throwaway palmate hygienic glove (10), obtained from transparent thermoplastic material (21) consisting of two film layers of similar material, which are superimposed, coupled and heat-sealed, said heat sealing (110) being obtained in such a way as to follow the profile of the hand, which includes the five fingers of the hand (d1-d5) and the palm of the hand (p) leaving free the end which corresponds to the opening (i) and allowing to wear the glove (10), in which said glove (10) in the area between the fingers (d1-d5) presents continuous transparent thermoplastic material (21) in such a way that said glove (10) is contained inside said panel (100) **characterised in that** the glove (10) is obtained starting from a single-bending transparent thermoplastic material film (201) wound on a main reel (200), with downstream of said main reel (200) a first calender (300) which starts the single-bending film (201) unwound from said main reel (200) through a heat sealing station (400) consisting of at least one hot plate having a shape of the profile of the glove (10), perforation lines (213) being obtained in proximity of the points of the fingers (d1-d5) and in correspondence of the wrist, each perforation line having a semicircular development with angle between 90° and 180° sexagesimal degrees and having convex shape which originates at a first (211) of the two edges (211, 21 2) of said transparent thermoplastic material tape (210) and extends in a non-symmetrical way up to the second (212) of said two edges (211, 212), and the heat sealed transparent thermoplastic material tape (210) being then extracted, through an extraction calender (500) and then wound by a corresponding winder (600).

5. Execution process of at least one throwaway palmate hygienic glove (10), according to claim 4, **characterised in that** the single-bending film (201) wound on the main reel (200) is of the type formed with ornamental patterns, in such a way that each glove (10) is provided with information for communication purposes or decorated according to the user needs.

## Patentansprüche

1. Hygienischer Einweg-Fingerhandschuh (10), bestehend aus einer Oberfläche (100) aus transparentem thermoplastischem Material (21) bestehend aus zwei Filmschichten aus ähnlichem Material, die übereinandergelegt, verbunden und verschweißt werden, wobei die Verschweißung (110) derart erhalten wird, um dem Profil der Hand zu folgen, das die fünf Finger der Hand (d1-d5) umfasst und die Handfläche (p), unter Freilassung des offenen Endes (i), das es gestattet, den Handschuh (10) zu tragen, wobei der Handschuh (10) in dem Bereich zwischen den Fingern (d1-d5) kontinuierliches transparentes thermoplastisches Material (21) aufweist, so dass der Handschuh (10) in besagter Oberfläche (100) enthalten ist, **gekennzeichnet dadurch, dass** im Vorderteil des Handschuhs (10) dieser eine im wesentlichen halbrunde Vorderkante (120) mit konvexer Form aufweist, die gering beabstandet von den Fingern (d1-d5) ist und die bei den beiden parallelen Seitenrändern (130, 131) der Oberfläche (100) beginnt und endet, und wobei das untere Teil der betreffenden Oberfläche (100) eine im wesentlichen halbrunde Hinterkante (140) mit konvexer Form aufweist, die an den beiden parallelen Seitenrändern (130, 131) der Oberfläche (1 00) beginnt und endet, und bei der sowohl die Vorderkante (120) als auch die Hinterkante (140) parallel zueinander sind und an einer gemeinsamen Seitenkante (1 30) beginnen, in einer anderen Höhe als die Seitenkante (131).

2. Hygienischer Einweg-Fingerhandschuh (10) nach Anspruch 1, **gekennzeichnet dadurch, dass** von der Innenseite des Profils, das von der Verschweißung (110) definiert ist, ein sichtbares Profil (111) erhalten wird, mittels Formung, die der Bahn des Profils folgt, definiert von der Verschweißung (110).

3. Hygienischer Einweg-Fingerhandschuh (10) nach Anspruch 1 und 2, **gekennzeichnet dadurch, dass** er in einer kontinuierlichen Operation aus einem Band aus transparentem thermoplastischem Material (210) erhalten wird, so dass jeder Handschuh (10) auf die anderen ausgerichtet ist und in Längsrichtung in bezug auf das Band aus transparentem thermoplastischem Material (210) und dann auf eine Ausgaberolle (20) gewickelt wird, wobei jeder Handschuh (10) an den anderen angrenzt und abreißbar ist
und so ausgerichtet, dass die Finger der Hand (d1-d5) zur Öffnung (i) des benachbarten Handschuhs hin gerichtet sind, wobei die Seitenränder (211,212) des Bandes aus transparentem thermoplastischem Material, (210) jeweils mit den Seitenrändern (130, 131) der Oberfläche (100) jedes Handschuhs (10) zusammenfallen, dessen Vorderkante (120) und Hinterkante (140) ein Teil bilden, wobei letztere erhalten werden, indem man Schritt für Schritt Perforierungslinien (213) in das Band aus transparentem thermoplastischem Material (210) eingraviert,
wobei die Perforierungslinien (213) in der Nähe der Fingerspitzen (d1-d5) und am Handgelenk erhalten werden, wobei jede Perforierungslinie (213) halbrund ist mit einem Winkel zwischen 90° und 180° Sechzigstel Grad mit konvexer Form, die an einem ersten (211) der beiden Ränder (211,212) des Bands aus transparentem thermoplastischem Material (210) beginnt und sich auf nicht symmetrische Art bis zu dem zweiten (212) der beiden Ränder erstreckt.

4. Herstellungsverfahren für mindestens einen hygienischem Einweg-Fingerhandschuh, (10) aus transparentem thermoplastischem Material (21) bestehend aus zwei Filmschichten aus ähnlichem Material, die übereinandergelegt, verbunden und verschweißt werden, wobei die Verschweißung (110) erhalten wird, um dem Profil der Hand zu folgen, das die fünf Finger der Hand (d1-d5) umfasst und die Handfläche (p) unter Freilassung des Endes, das der Öffnung (i) entspricht und das es gestattet, den Handschuh (10) zu tragen, wobei der Handschuh (10) in dem Bereich zwischen den Fingern (d1-d5) kontinuierliches transparentes thermoplastisches Material (21) aufweist, so dass der Handschuh (10) in der Oberfläche (100) enthalten ist, **gekennzeichnet dadurch, dass** der Handschuh (10) aus einem Film aus transparentem thermoplastischem Material mit einer Biegung (201) erhalten wird, auf eine Hauptrolle (200) gewickelt, wobei der Hauptrolle (200) ein erster Kalander (300) nachgeschaltet ist, der den Film mit einer Biegung (201) startet, der von besagter Hauptrolle (200) abgerollt wird, durch eine Verschweißungsstation (400) bestehend aus mindestens einer heißen Platte in der Form des Profils des Handschuhs (10),
wobei Perforierungslinien (213) in der Nähe der Fingerspitzen (d1-d5) und am Handgelenk erhalten werden, wobei jede Perforierungslinie halbrund ist mit einem Winkel zwischen 90° und 180° Sechzigstel Grad und mit konvexer Form, die an einem ersten (211) der beiden Ränder (211,212) des Bandes aus transparentem thermoplastischem Material (210) beginnt und sich auf nicht symmetrische Art bis zu dem zweiten (212) der beiden Ränder (211,212) erstreckt, und das verschweißte Band aus transparentem thermoplastischem Material (210) wird dann von einem Extraktionskalander (500) herausgezogen und von einem entsprechenden Wickler (600) aufgewickelt.

5. Herstellungsverfahren für mindestens einen hygienischem Einweg-Fingerhandschuh (10) nach Anspruch 4, **gekennzeichnet dadurch, dass** der Film mit einer Biegung (201), der auf die Hauptrolle (200) gewickelt ist, Schmuckmuster aufweist, so dass jeder Handschuh (10) Informationen für Kommunikationszwecke gibt oder nach den Bedürfnissen des Benutzers geschmückt ist.

## Revendications

1. Gant palmé hygiénique jetable (10) se composant d'un panneau (100) obtenu à partir de matière thermoplastique transparente (21) composé de deux couches de film de matière similaire qui sont superposées, accouplées et thermosoudées, ledit thermosoudage (110) étant obtenu de façon à suivre le profilé de la main, qui inclut les cinq doigts de la main (d1-d5) et la paume de la main (p) en laissant libre l'extrémité correspondant à l'ouverture (i) et permettant de porter le gant (10), où ledit gant (10) dans la zone entre les doigts (d1-d5) a une matière thermoplastique transparente continue (21) de façon à ce que ledit gant (10) est contenu dans ledit panneau (100),
**caractérisé en ce que** sur la partie frontale dudit gant (10) celui-ci a un bord frontal essentiellement semi-circulaire (120) avec une forme convexe, qui reste légèrement éloigné des doigts (d1-d5) et qui commence et finit aux deux bords de côté parallèles (130, 131) dudit panneau (100), et où la partie inférieure du panneau relatif (100) a un bord arrière essentiellement semi-circulaire (140), avec une forme convexe, lequel bord (140) commence et finit aux deux bords de côté parallèles (130,131) dudit panneau (100), et où et le bord frontal (120) et le bord arrière (140) sont parallèles l'un à l'autre et commencent depuis le bord de côté commun (130) à une hauteur différente du bord de côté (131).

2. Gant palmé hygiénique jetable (10) selon la revendication 1, **caractérisé en ce que** depuis le côté interne du profilé défini par le thermosoudage (110) un profilé visible est obtenu (111) par un façonnage qui suit le parcours dudit profilé, défini par le thermosoudage (110).

3. Gant palmé hygiénique jetable (10) selon les revendications 1 et 2, **caractérisé en ce que** celui-ci est obtenu dans une opération continue en correspondance avec une bande en matière thermoplastique transparente (210) de façon à ce que chaque gant (10) est aligné à l'autre et longitudinalement par rapport à ladite bande en matière thermoplastique transparente (210) et puis bobiné sur une bobine de distribution (20), chaque gant (10) étant contigu et détachable par déchirement par rapport à l'autre
et aligné de façon à orienter les doigts de la main (d1-d5) vers l'ouverture (i) du gant adjacent, où les bords de côté (211, 212) de la bande en matière thermoplastique transparente (210) coïncident chaque fois avec les bords de côté (130, 131) du panneau (100) de chaque gant (10) dont le bord frontal (120) et le bord arrière (140) forment partie intégrante, ces derniers étant obtenus en gravant pas à pas des lignes de perforation (213) dans ladite bande en matière thermoplastique transparente (210), lesdites lignes de perforation (213) étant obtenues à proximité des bouts des doigts (d1-d5) et du poignet, chacune desdites lignes de perforation (213) ayant un développement semi-circulaire avec un angle entre 90° et 180° sexagésimaux et ayant une forme convexe qui commence près d'un premier (211) des deux bords (211,212) de ladite bande en matière thermoplastique transparente (210) et s'étend de façon non-symétrique jusqu'au deuxième (212) desdits deux bords.

4. Procédé d'exécution d'au moins un gant palmé hygiénique jetable (10), obtenu à partir de matière thermoplastique transparente (21) composé de deux couches de film en matière similaire qui sont superposées, accouplées et thermosoudées, ledit thermosoudage (110) étant obtenu de façon à suivre le profilé de la main, qui inclut les cinq doigts de la main (d1-d5) et la paume de la main (p) en laissant libre l'extrémité qui correspond à l'ouverture (i) et qui permet de porter le gant (10), où ledit gant (10) dans la zone entre les doigts (d1-d5) présente une matière thermoplastique transparente continue (21) de façon à ce que ledit gant (10) est contenu dans ledit panneau (100), **caractérisé en ce que** le gant (10) est obtenu à partir d'un film de matière thermoplastique mono-plié transparente (201) bobiné sur une bobine principale (200), avec en aval de ladite bobine principale (200) une première calandre (300) qui commence le film mono-plié (201) déroulé de ladite bobine principale (200) à travers une station de thermosoudage (400) composée d'au moins une plaque chaude ayant une forme du profilé du gant (10), des lignes de perforation (213) étant obtenues en proximité des bouts des doigts (d1-d5) et du poignet, chaque ligne de perforation ayant un développement semi-circulaire avec un angle entre 90° et 180° degrés sexagésimaux et une forme convexe qui commence à un premier (211) des deux bords (211, 212) de ladite bande en matière thermoplastique transparente (210) et s'étend de façon non-symétrique jusqu'au deuxième (212) desdits deux bords (211,212), et la bande en matière thermoplastique transparente thermosoudée (210) est ensuite extraite à travers une calandre d'extraction (500) et puis bobinée par un bobineur correspondant (600).

5. Procédé d'exécution d'au moins un gant palmé hygiénique jetable (10) selon la revendication 4, **caractérisé en ce que** le film mono-plié (201) bobiné sur la bobine principale (200) est formé avec des dessins ornementaux de façon à ce que chaque gant (10) est pourvu d'informations pour des buts de communication ou décoré selon les besoins de l'utilisateur.
